# EUROPEAN PATENT APPLICATION

(11) **EP 4 557 479 A1**
(43) Date of publication of application: **21.05.2025**
(21) Application number: 23838756.7
(22) Date of filing: 30.06.2023
(51) Int. Cl.: H01M 50/244, H01M 10/04, H01M 10/42, H01M 50/209, H01M 50/233, H01M 50/103

(54) **ENERGY STORAGE BATTERY CABINET AND ENERGY STORAGE SYSTEM HAVING SAME**

(30) Priority: 15.07.2022 CN 202210833933
(71) Applicant: BYD Company Limited, Shenzhen, Guangdong 518118 (CN)
(72) Inventor: SUI, Jiahai, Shenzhen, Guangdong 518118 (CN); YIN, Xueqin, Shenzhen, Guangdong 518118 (CN); CAO, Hu, Shenzhen, Guangdong 518118 (CN); LIU, Weijie, Shenzhen, Guangdong 518118 (CN); YIN, Xiaoqiang, Shenzhen, Guangdong 518118 (CN)
(74) Representative: Mathys & Squire
(86) International application number: PCT/CN2023/104725
(87) International publication number: WO 2024/012264

(57) **Abstract**

An energy storage system, provided with an energy storage battery cabinet. The energy storage battery cabinet comprises a cabinet body and a plurality of battery cells. The width W₁ of the cabinet body, the depth D₁ of the cabinet body, and the height H₁ of the cabinet body satisfy: 0.8 ≤ W₁/D₁ ≤ 1.2 and 0.8 ≤ (W₁+D₁)/H₁ ≤ 1.2. The plurality of battery cells are disposed in the cabinet body, and the length L of each battery cell, the thickness D of each battery cell, and the width H of the battery cell satisfy: (D+H)/L ≤ 0.2. The volume V₁ of each battery cell and the volume V₃ of the cabinet body satisfy: 0.0004 ≤ V₁/V₃ ≤ 0.001.

## Description

### CROSS-REFERENCE TO RELATED APPLICATIONS

The present disclosure claims priority to and benefits of Chinese Patent Application No. 202210833933.3, entitled "ENERGY STORAGE BATTERY CABINET AND ENERGY STORAGE SYSTEM HAVING SAME", and filed by BYD Co., Ltd. on July 15, 2022.

### FIELD

The present disclosure relates to the technical field of energy storage, and more specifically, to an energy storage battery cabinet and an energy storage system having same.

### BACKGROUND

In the related art, multiple battery packs are usually placed in an energy storage cabinet, and multiple battery cells are provided in the battery pack. A battery pack in the energy storage cabinet is provided with a housing and remaining structures. The Volumetric Cell to System rate (Volumetric Cell to System, VCTS) has been degraded twice. Settings of the size and volume of a cabinet body of the energy storage cabinet and the size and volume of the battery cell are unsuitable, resulting in reduction of the Volumetric Cell to System rate. Generally, the Volumetric Cell to System rate is lower than 28%, resulting in a low energy density.

### SUMMARY

The present disclosure aims to resolve at least one of the technical problems in the related art. To this end, an objective of the present disclosure is to provide an energy storage battery cabinet. The energy storage battery cabinet gives consideration to both advantages of a high Volumetric Cell to System rate and a high energy density and an output voltage of the energy storage battery cabinet by controlling a size parameter of the cabinet body and a size parameter of the battery cell.

The present disclosure further provides an energy storage system having the above energy storage battery cabinet.

In order to achieve the above objective, an embodiment of a first aspect of the present disclosure provides an energy storage battery cabinet, including: a cabinet body, a width W1 of the cabinet body, a depth D1 of the cabinet body, and a height H1 of the cabinet body satisfying: 0.8 ≤W1/D1 ≤ 1.2 and 0.8 ≤(W1+D1)/H1 ≤ 1.2; a plurality of battery cells, the plurality of battery cells being disposed in the cabinet body, and a length L of each battery cell, a thickness D of the battery cell, and a width H of the battery cells satisfying: (D+H)/L ≤ 0.2, where a volume V1 of each battery cell and a volume V₃ of the cabinet body satisfy: 0.0004 ≤ V₁/V₃ ≤ 0.001.

The energy storage battery cabinet according to this embodiment of the present disclosure gives consideration to both advantages of a high Volumetric Cell to System rate and a high energy density and an output voltage of the energy storage battery cabinet by controlling a size parameter of the cabinet body and a size parameter of the battery cell.

According to some examples of the present disclosure, the battery cell is configured in a rectangular parallelepiped shape.

According to some examples of the present disclosure, a sum V₂ of volumes of the plurality of battery cells and the volume V3 of the cabinet body satisfy: 0.35 ≤ V₂/V₃ ≤ 0.5.

According to some examples of the present disclosure, L, D, and H respectively satisfy: 400 mm ≤ L ≤ 1200 mm, 10 mm ≤ D ≤ 40 mm, and 60 mm ≤ H ≤ 150 mm.

According to some examples of the present disclosure, L, D, and H respectively satisfy: 800 mm ≤ L ≤ 970 mm, 10 mm ≤ D ≤ 30 mm, and 80 mm ≤ H ≤ 130 mm.

According to some examples of the present disclosure, W1, D1, and H1 respectively satisfy: 600 mm ≤ W1 ≤ 1200 mm, 700 mm ≤ D1 ≤ 1250 mm, and 1300 mm ≤ H1 ≤ 2600 mm.

According to some examples of the present disclosure, L and W1 satisfy: 0.35 ≤ L/W1 < 1.

According to some examples of the present disclosure, the energy storage battery cabinet further includes: a plurality of battery cell layer groups, the plurality of battery cell layer groups being stacked along a height direction of the cabinet body, each battery cell layer group including at least one battery cell in one of the width direction and the depth direction of the cabinet body, and including the plurality of battery cells in the other one of the width direction and the depth direction of the cabinet body.

According to some examples of the present disclosure, length directions of the battery cells are arranged along the width direction of the cabinet body, thickness directions of the battery cells are arranged along the depth direction of the cabinet body, and width directions of the battery cells are arranged along the height direction of the cabinet body.

According to some examples of the present disclosure, the number of the battery cell layer groups ranges from 8 to 18.

According to some examples of the present disclosure, the plurality of battery cell layer groups arranged in the height direction of the cabinet body define an overall width of W₂, an overall depth of D₂, and an overall height of H₂. W₂, D₂, and H₂ respectively satisfy: 500 mm ≤ W₂ ≤ 1100 mm; 450 mm ≤ D₂ ≤ 1000 mm; and 1150 mm ≤ H₂ ≤ 2450 mm.

According to some examples of the present disclosure, the plurality of battery cell layer groups form a battery cell unit. Or, the plurality of the battery cell layer groups form a plurality of battery cell units. The plurality of battery cell units are arranged in the height direction of the cabinet body. Each battery cell unit includes the plurality of battery cell layer groups and two adjacent battery cell layer groups of each battery cell unit abut against each other.

According to some examples of the present disclosure, an air duct gap is provided between battery cells of two adjacent battery cell layer groups of each battery cell unit.

According to some examples of the present disclosure, the air duct gap has a size ranging from 5 mm to 20 mm in the height direction of the cabinet body.

According to some examples of the present disclosure, each battery cell layer group further includes: a first bottom plate and a second bottom plate. The first bottom plate and the second bottom plate are spaced apart along one of the width direction of the cabinet body and the depth direction of the cabinet body. For each of the two adjacent battery cell layer groups of the battery cell unit, the first bottom plate and the second bottom plate of one battery cell layer group abut against the battery cells of the other battery cell layer group. An air duct gap is formed between the first bottom plate and the second bottom plate.

According to some examples of the present disclosure, each battery cell layer group further includes: a first side plate and a second side plate. The first side plate and the second side plate are spaced apart along the other direction of the width direction of the cabinet body and the depth direction of the cabinet body. Two ends of the first bottom plate are respectively connected to one end of the first side plate and one end of the second side plate. Two ends of the second bottom plate are respectively connected to the other end of the first side plate and the other end of the second side plate. For two adjacent battery cell layer groups in the height direction of the cabinet body, the first bottom plate of one battery cell layer group abuts against the first side plate and the second side plate of the other battery cell layer group, and the second bottom plate of the one battery cell layer group abuts against the first side plate and the second side plate of the other battery cell layer group.

According to some examples of the present disclosure, each of the first bottom plate and the second bottom plate is provided with one of a limiting bar and a limiting hole. Each of the first side plate and the second side plate is provided with the other one of the limiting bar and the limiting hole. For the two adjacent battery cell layer groups in the height direction of the cabinet body, the limiting bar of one battery cell layer group is matched with the limiting hole of the other battery cell layer group.

According to some examples of the present disclosure, either the limiting bars or the limiting holes are distributed at two ends of the first bottom plate and two ends of the second bottom plate. The other one of the limiting bars and the limiting holes are distributed at two ends of the first side plate and two ends of the second side plate.

According to some examples of the present disclosure, for the two adjacent battery cell layer groups in the height direction of the cabinet body, the first side plate of the other battery cell layer group is fastened to the first bottom plate and the second bottom plate of the one battery cell layer group by first fasteners, and the second side plate of the other battery cell layer group is fastened to the first bottom plate and the second bottom plate of the one battery cell layer group by second fasteners.

According to some examples of the present disclosure, the first fasteners are distributed at two ends of the first side plate. The second fasteners are distributed at two ends of the second side plate.

According to some examples of the present disclosure, each battery cell unit includes a base and plurality of battery cells of the battery cell unit are supported by the base.

According to some examples of the present disclosure, at least one restraint band is arranged above each battery cell unit. Two ends of each restraint band are respectively connected to pull rods. A lower end of each pull rod is connected to the base of the battery cell unit.

According to some examples of the present disclosure, the energy storage battery cabinet further includes: a refrigeration unit. The refrigeration unit is installed in the cabinet body and located on one side of the cabinet body in the depth direction of the cabinet body. The refrigeration unit is provided with an air outlet and a return air inlet. A side of the cabinet body in the height direction of the cabinet body is configured with a heat dissipation air duct communicated with the air outlet. An air duct gap is provided between the battery cells of the two adjacent battery cell layer groups in the height direction of the cabinet body. An airflow flows into the heat dissipation air duct from the air outlet, then flows through the plurality of battery cell layer groups from the other side of the cabinet body in the depth direction and two sides of the cabinet body in the width direction, and flows to the return air inlet through the air duct gap.

According to some examples of the present disclosure, the cabinet body is provided with a cabinet door on one side of the cabinet body in the depth direction. The energy storage battery cabinet further includes a refrigeration unit. The refrigeration unit is installed in the cabinet body. The refrigeration unit is installed on the cabinet door. The plurality of battery cell layer groups are put in or taken out from the cabinet body by opening the cabinet door.

According to some examples of the present disclosure, the cabinet door is provided with an external circulation air inlet, an external circulation air outlet, and an exhaust apparatus. The external circulation air inlet, the external circulation air outlet, and the exhaust apparatus are arranged along the height direction of the cabinet body.

According to some examples of the present disclosure, the cabinet door is provided with a maintenance door openable and closable relative to the cabinet door. The maintenance door is located at a lower portion of the cabinet door in the height direction of the cabinet body.

According to an embodiment in a second aspect of the present disclosure, an energy storage system is provided, including at least one energy storage battery cabinet according to the embodiment of the first aspect of the present disclosure.

The additional aspects and advantages of the present disclosure will be provided in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings, where:
FIG. 1 is a schematic structural diagram of an energy storage battery cabinet with a cabinet door being closed according to an embodiment of the present disclosure;
FIG. 2 is a schematic structural diagram of an energy storage battery cabinet with a cabinet door being opened according to an embodiment of the present disclosure;
FIG. 3 is a schematic structural diagram of a battery cell unit of an energy storage battery cabinet according to an embodiment of the present disclosure;
FIG. 4 is a schematic structural diagram of a battery cell unit of an energy storage battery cabinet from another perspective according to an embodiment of the present disclosure;
FIG. 5 is a schematic structural diagram of an energy storage battery cabinet with a cabinet door being opened according to an embodiment of the present disclosure;
FIG. 6 is an exploded view of an energy storage battery cabinet according to another embodiment of the present disclosure;
FIG. 7 is a schematic structural diagram of an energy storage system according to an embodiment of the present disclosure;
FIG. 8 is a partially enlarged view of a region D in FIG. 3; and
FIG. 9 is an exploded view of a battery cell layer group in an energy storage battery cabinet according to an embodiment of the present disclosure.

In the drawings:
1. energy storage battery cabinet; 2. energy storage system;
100. cabinet body; 110. cabinet door; 120. heat dissipation air duct; 130. external circulation air inlet; 140. external circulation air outlet; 150. exhaust apparatus; 160. maintenance door;
200. battery cell; 210. battery cell layer group; 220. battery cell unit; 230. air duct gap; 240. first bottom plate; 250. second bottom plate; 260. base; 270. restraint band; 280. pull rod;
300. refrigeration unit; 310. air outlet; 320. return air inlet; 400. first side plate; 410. first fastener;
500. second side plate; 510. second fastener; 600. limiting bar; 700. limiting hole.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are merely intended to explain the present disclosure and cannot be construed as a limitation to the present disclosure.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure.

In the description of the present disclosure, "a number of" means two or more than two, and "several" means one or more.

An energy storage battery cabinet 1 according to an embodiment of the present disclosure is described with reference to accompanying drawings.

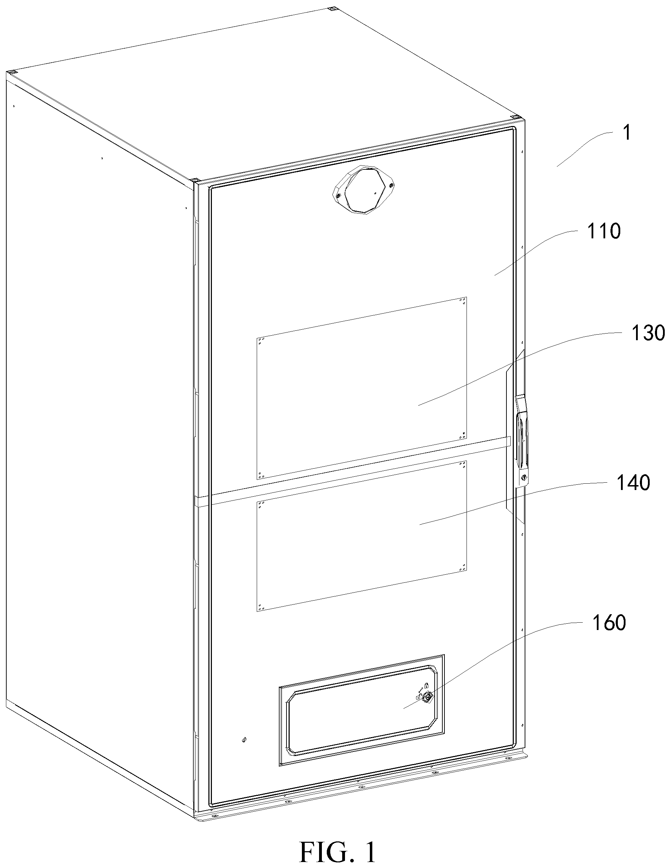

As shown in FIG. 1 to FIG. 7, the energy storage battery cabinet 1 according to this embodiment of the present disclosure includes a cabinet body 100 and plurality of battery cells 200.

A width W₁ of the cabinet body 100, a depth D₁ of the cabinet body 100, and a height H₁ of the cabinet body 100 satisfy: 0.8 ≤ W₁/D₁ ≤ 1.2 and 0.8 ≤ (W₁+D₁)/H₁ ≤ 1.2. The plurality of battery cells 200 are disposed in the cabinet body 100, and a length L of each battery cell 200, a thickness D of the battery cell 200, and a width H of the battery cell 200 satisfy: (D+H)/L ≤ 0.2. A volume V₁ of each battery cell 200 and a volume V₃ of the cabinet body 100 satisfy: 0.0004 ≤ V₁/V₃ ≤ 0.001.

The energy storage battery cabinet 1 can satisfy the use requirements of industrial and commercial energy storage and household energy storage. Moreover, the volume of each battery cell 200 may range from 1.20×10⁻³ m³ to 1.24×10⁻³ m³. For example, the volume of the battery cell 200 is 1.22× 10⁻³ m³. The width, depth, height of the cabinet body 100, and distances between outer side surfaces of the cabinet body 100 are calculated. The volume of the battery cell 200 is a product of the length L, the thickness D, and the width H of the battery cell 200. The length L of the battery cell 200 includes poles at two ends of the battery cell 200.

According to the energy storage battery cabinet 1 of this embodiment of the present disclosure, a ratio of the width W₁ to the depth D₁ of the cabinet body 100 is set to ranging from 0.8 to 1.2. For example, the ratio of the width W₁ to the depth D₁ of the cabinet body 100 may be 0.8, 0.85, 0.9, 0.95, 1, 1.05, 1.1, 1.15, or 1.2. A ratio of a sum of the width W₁ and the depth D₁ of cabinet body 100 to the height H₁ of the cabinet body 100 ranges from 0.8 to 1.2. For example, the ratio of the sum of the width W₁ and the depth D₁ of the cabinet body 100 to the height H₁ of the cabinet body 100 may be 0.8, 0.85, 0.9, 0.95, 1, 1.05, 1.1, 1.15, and 1.2. Therefore, the width and depth of the energy storage battery cabinet 1 approach the same. The height of the energy storage battery cabinet 1 approaches twice the width or depth of the energy storage battery cabinet 1.

In addition, the length L of the battery cell 200, the thickness D of the battery cell 200, and the width H of the battery cell 200 satisfy: (D+H)/L ≤ 0.2. Therefore, the thickness and the width of the battery cell 200 are ensured to be far less than the length of the battery cell 200, to cause that the battery cell 200 is configured as an elongated structure.

The volume V₁ of each battery cell 200 and the volume V₃ of the cabinet body 100 satisfy: 0.0004 ≤ V₁/V₃ ≤ 0.001. By setting V₁/V₃ to not less than 0.0004 and not greater than 0.001, the number of battery cells 200 accommodated in a unit volume of the energy storage battery cabinet 1 of the present disclosure is appropriate. An output voltage of the energy storage battery cabinet 1 can be ensured while the volume utilization rate of the energy storage battery cabinet 1 is improved.

For example, if V₁/V₃ ≤ 0.0004, a volume proportion of one individual battery cell 200 is small. In order to ensure the output voltage of the energy storage system 2, the number of battery cells 200 needs to fall within a particular range. Therefore, a relatively large space in which no battery cells 200 are arranged may exist in the energy storage battery cabinet 1, to cause that the volume utilization rate of the energy storage battery cabinet 1 becomes low. If V₁/V₃ > 0.001, a volume proportion of one individual battery cell 200 is excessively large. The number of the battery cells 200 cannot be large even if the battery cells 200 are arranged in the energy storage battery cabinet 1 as much as possible. Therefore, an overall output voltage of the battery cells 200 cannot reach an output voltage required by the energy storage battery cabinet 1. In other words, the output voltage of the energy storage battery cabinet 1 cannot be taken into account.

By such the arrangement, on one hand, the volume of the cabinet body 100 is prevented from being excessively greater than the volume of the battery cell 200, the cabinet body 100 can be filled up without an excessive large number of battery cells 200, and the assembling is convenient. Moreover, the cabinet body 100 can be filled up with the plurality of battery cells 200 as much as possible, a relatively small number of battery cells 200 in a unit volume of the cabinet body 100 is avoided. Therefore, the volume utilization rate of the battery cells 200 is increased.

On the other hand, an excessively small difference between the volume of the cabinet body 100 and the volume of the battery cell 200 can be avoided. The number of the battery cells 200 in the cabinet body 100 can reach a particular value. Therefore, the overall output voltage of the battery cells 200 falls within a particular range, and further the output voltage of the energy storage battery cabinet 1 satisfies a use requirement.

In view of the above, 0.8 ≤ W₁/D₁ ≤ 1.2, 0.8 ≤ (W₁+D₁)/H₁ ≤ 1.2, (D+H)/L ≤ 0.2, and 0.0004 ≤ V₁/V₃ ≤ 0.001. The energy storage battery cabinet 1 that satisfies the above four conditions has a high Volumetric Cell to System rate, a high energy density, and a moderate volume, and can take into account the output voltage of the energy storage battery cabinet 1.

In this way, the energy storage battery cabinet 1 according to this embodiment of the present disclosure gives consideration to both advantages of a high Volumetric Cell to System rate and a high energy density and an output voltage of the energy storage battery cabinet 1 by controlling a size parameter of the cabinet body 100 and a size parameter of the battery cell 200.

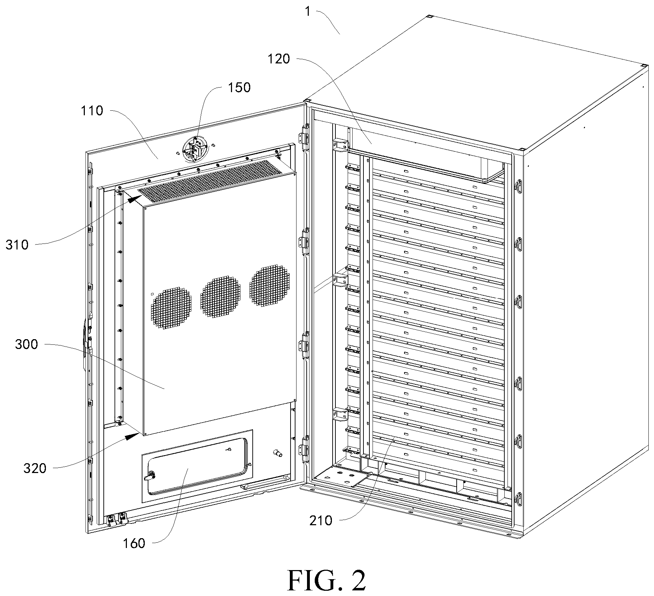

According to some specific embodiments of the present disclosure, as shown in FIG. 2 to FIG. 4, the battery cell 200 is configured in a rectangular parallelepiped shape. It should be noted that, the battery cell 200 is generally rectangular parallelepiped-like, and is not necessarily of a strictly rectangular parallelepiped shape.

Compared with cylindrical battery cells or special-shaped battery cells having a relatively large number of arc surfaces, apart from necessary structures (for example, heat isolation treatment) in the energy storage battery cabinet 1, the volume of space in the energy storage battery cabinet 1 can be utilized to the maximum extent by stacking the rectangular parallelepiped-shaped battery cells 200, to cause that the space utilization rate is increased. For example, for the rectangular parallelepiped-shaped battery cells 200, the space in the width direction of the energy storage battery cabinet 1 in the length direction of the rectangular parallelepiped-shaped battery cells 200 can be maximally made. When the rectangular parallelepiped-shaped battery cells 200 are placed side by side in the thickness direction and the height direction thereof, the space in the depth direction of the energy storage battery cabinet 1 can be maximally made.

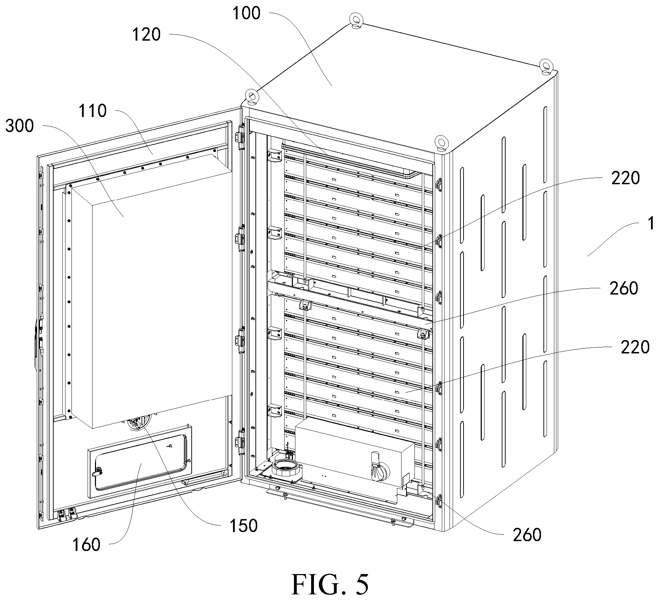

According to some specific embodiments of the present disclosure, as shown in FIG. 2 and FIG. 5, a sum V₂ of volumes of the plurality of battery cells 200 and the volume V₃ of the cabinet body 100 satisfy: 0.35 ≤ V₂/V₃ ≤ 0.5. For example, each battery cell 200 is in an optimal working state when a voltage of the battery cell 200 is about 3.2 V. The energy storage battery cabinet 1 achieves an optimal efficiency when a voltage range of the energy storage battery cabinet 1 ranges from 998.4 VDC to 1497.6 VDC.

Based on restrains of V₂/V₃ and V₁/V₃, the number of the battery cells 200 can be determined, to determine the output voltage of the energy storage battery cabinet 1 and ensure the efficiency of the energy storage battery cabinet 1. The solution can take into account both the volume utilization rate of the energy storage battery cabinet 1 and the output voltage of the energy storage battery cabinet 1, that is, take into account both the volume utilization rate of the energy storage battery cabinet 1 and the efficiency of the energy storage battery cabinet 1.

For example, a space in the cabinet body 100 other than the space occupied by the battery cells 200 can be configured for arranging units such as a control unit, a refrigeration unit 300, and a fire fighting unit. Therefore, a sufficient space is left for arranging other units while the Volumetric Cell to System rate of the energy storage battery cabinet 1 is increased. The space of the energy storage battery cabinet 1 is more fully utilized, and the volume of the energy storage battery cabinet 1 does not need to be set excessively large, to cause that the energy storage battery cabinet 1 can be conveniently applied to different scenarios. Moreover, the Volumetric Cell to System rate of the energy storage battery cabinet 1 can reach a minimum of 35%, or even a maximum of 50%. The Volumetric Cell to System rate of the energy storage battery cabinet 1 of the present disclosure far exceeds the Volumetric Cell to System rate of the energy storage battery cabinet in the related art. The energy density of the energy storage battery cabinet 1 of the present disclosure is high.

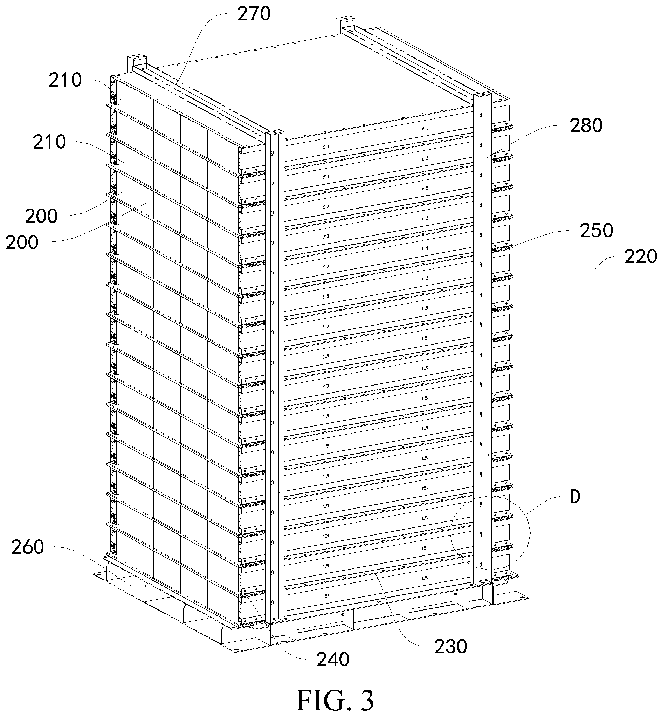

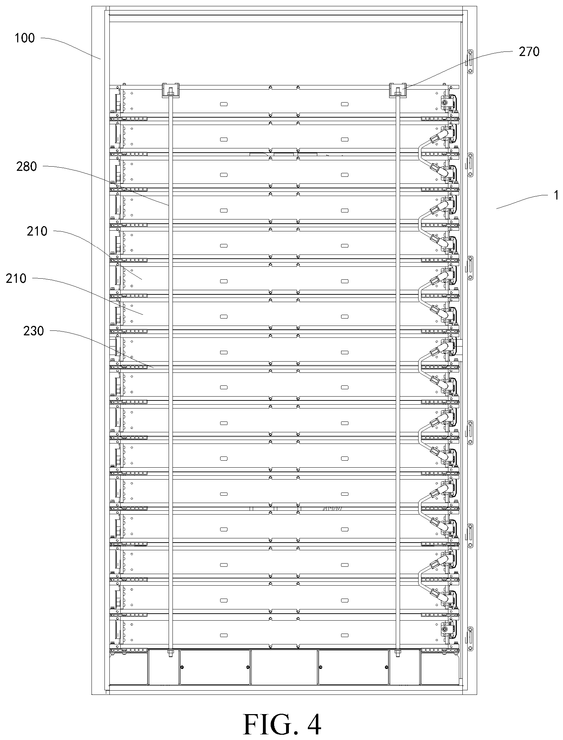

According to some specific embodiments of the present disclosure, as shown in FIG. 3 and FIG. 4, the length L of the battery cell 200 and the width W₁ of the cabinet body 100 satisfy: 0.35 ≤ L/W₁ <1. Further, the length of the battery cell 210 and the width W₁ of the cabinet body 100 satisfy: 0.8 ≤ L/W₁ < 1.

A ratio of the length L of the battery cell 200 to the width W₁ of the cabinet body 100 is not less than 0.8, and a ratio of the length L of the battery cell 200 to the width W₁ of the cabinet body 100 is less than 1. The battery cell 200 has a smaller gap with an inner wall of the cabinet body 100 in the length direction of the battery cell 200. The Volumetric Cell to System rate is high. For example, the Volumetric Cell to System rate can reach 42.7%. Therefore, the length direction of the battery cells 200 and the width direction of the cabinet body 100 may be arranged in a same mode. The arrangement mode of the battery cells 200 in the cabinet body 100 is more diverse.

According to some specific embodiments of the present disclosure, as shown in FIG. 3 and FIG. 4, the length L of the battery cell 200, the thickness D of the battery cell 200, and the width H of the battery cell 200 respectively satisfy: 400 mm ≤ L ≤ 1200 mm, 10 mm ≤ D ≤ 40 mm, and 60 mm ≤ H ≤ 150 mm. For example, L may be 500 mm, 550 mm, 600 mm, 650 mm, 700 mm, 750 mm, 800 mm, 850 mm, 900 mm, 950 mm, 1000 mm, 1050 mm, 1100 mm, 1150 mm, or 1200 mm.

A household energy storage battery cabinet 1 generally uses a wall-mounted structure, a battery cell 200 needs to be in a flat form as much as possible, and battery cells 200 on each battery cell layer group 210 also needs to be in a flat form as much as possible after being arranged. With such the arrangement, after the energy storage battery cabinet 1 using the above battery cells 200 is hung on a wall, the size of a portion protruding from a wall surface is not prone to exceeding 500 mm, so as to hardly interfere with normal activities of a user in the home, and better satisfy the use requirements of home users.

According to some specific embodiments of the present disclosure, as shown in FIG. 3 and FIG. 4, the length L of the battery cell 200, the thickness D of the battery cell 200, and the width H of the battery cell 200 respectively satisfy: 800 mm ≤ L ≤ 970 mm, 10 mm ≤ D ≤ 30 mm, and 80 mm ≤ H ≤ 130 mm. For example, L may be 800 mm, 820 mm, 840 mm, 860 mm, 880 mm, 900 mm, 920 mm, 940 mm, 960 mm, or 970 mm.

The energy storage battery cabinet 1 used in industry and commerce generally requires one battery cell 200 to be arranged in a first direction, and a plurality of battery cells 200 can be stacked in a second direction and a third direction. Therefore, the energy storage battery cabinet 1 using the above battery cells 200 has more stored electricity and stronger power supply capacity, which satisfy the use requirements of industry and commerce.

According to some embodiments of the present disclosure, as shown in FIG. 3 and FIG. 4, a width W₁ of the cabinet body 100, a depth D₁ of the cabinet body 100, and a height H₁ of the cabinet body 100 satisfy: 600 mm ≤ W₁ ≤ 1200 mm, 700 mm ≤ D₁ ≤ 1250 mm, 1300 mm ≤ H₁ ≤ 2600 mm.

With such the arrangement, the size of the energy storage battery cabinet 1 is not excessively large, the structural strength of the energy storage battery cabinet 1 can be ensured, and the lifting is convenient. The size of the energy storage battery cabinet 1 is not excessively small, the energy storage battery cabinet 1 has sufficient space for arranging the battery cells 200, and the power supply duration of the energy storage battery cabinet 1 is prolonged. For example, energy storage battery cabinets 1 can be stacked and transported and used in a 20GP container or a 40GP container. In a 20GP container, ten energy storage battery cabinets 1 can be transported. In a 40GP container, 20 energy storage battery cabinets 1 can be transported, and the transportation cost is significantly reduced.

According to some specific embodiments of the present disclosure, as shown in FIG. 3, a plurality of battery cells 200 form multiple battery cell layer groups 210. The plurality of battery cell layer groups 210 are stacked in a height direction of the cabinet body 100. Each battery cell layer group 210 includes at least one battery cell 200 in one of the width direction and the depth direction of the cabinet body 100, and includes the plurality of battery cells 200 in the other one of the width direction and the depth direction of the cabinet body 100.

In an actual application of the energy storage battery cabinet 1, the height direction of the cabinet body 100 is generally a vertical direction, and a bottom surface of each battery cell layer group 210 abuts against a top surface of a battery cell layer group 210 below it. Moreover, under the action of gravity, except for a lowermost battery cell layer group 210, each remaining battery cell layer group 210 is pressed to a lower battery cell layer group 210 adjacent thereto. With such the arrangement, the plurality of battery cell layer groups 210 are reliably stopped, so that the plurality of battery cell layer groups 210 are mutually limited, so as to realize the stable positioning of the plurality of battery cell layer groups 210 in the cabinet body 100 and ensure the safety of an electrical connection.

Compared with an energy storage battery cabinet in the related art in which positions of the battery cell layer groups are fixed by arranging a structure such as a bracket or a housing, the energy storage battery cabinet 1 of the present disclosure performs position limit by the plurality of battery cell layer groups 210, a limit fastening structure does not need to be additionally provided and the number of parts is reduced, to cause that more space in the energy storage battery cabinet 1 can be left for arranging the battery cells 200, and to improve the energy density of the energy storage battery cabinet 1 and the volume utilization rate of the battery cells 200.

According to some specific embodiments of the present disclosure, as shown in FIG. 2 to FIG. 5, length directions of the battery cells 200 are arranged along the width direction of the cabinet body 100. Thickness directions of the battery cells 200 are arranged along the depth direction of the cabinet body 100. Width directions of the battery cells 200 are arranged along the height direction of the cabinet body 100.

The length of each battery cell 200 is generally greater than the thickness of the battery cell 200 and the width of the battery cell 200. By arranging the lengths of the battery cells 200 along the width direction of the cabinet body 100, the lengths of the battery cell 200 may be substantially the same as the width of the cabinet body 100 on the premise of satisfying the electrical safety requirement, to cause that the battery cells 200 fill up the cabinet body 100 as much as possible in the width direction of the cabinet body 100. Moreover, according to a relationship between the thickness of the battery cell and the depth of the cabinet body 100, the number of the battery cells 200 of each battery cell layer group 210 arranged in the depth direction of the cabinet body 100 can be determined, to cause that the battery cells 200 fill up the cabinet body 100 as much as possible in the depth direction of the cabinet body 100. Therefore, the Volumetric Cell to System rate and the energy density of the energy storage battery cabinet 1 are increased.

According to some specific embodiments of the present disclosure, as shown in FIG. 2 to FIG. 5, the number of the battery cell layer groups 210 ranges from 8 to 18.

The battery cell layer groups 210 need to support each other, and therefore during use of the energy storage battery cabinet 1, one of two outermost battery cell layer groups 210 needs to bear the pressure of the other battery cell layer group 210. Therefore, by setting the number of the battery cell layer groups 210 to be not greater than 18, the outermost battery cell layer groups 210 can be prevented from being broken by pressure, to cause that the service life of each battery cell layer group 210 is ensured. Moreover, the number of the battery cell layer groups 210 is not less than 8, to cause that the volume utilization rate of the battery cells 200 in the energy storage battery cabinet 1 is increased and the power supply duration of the energy storage battery cabinet 1 is prolonged.

According to some specific embodiments of the present disclosure, as shown in FIG. 2 to FIG. 5, the plurality of battery cell layer groups 210 arranged in the height direction of the cabinet body 100 define an overall width of W₂, an overall depth of D₂, and an overall height of H₂. W₂, D₂, and H₂ respectively satisfy: 500 mm ≤ W₂ ≤ 1100 mm, 450 mm ≤ D₂ ≤ 1000 mm, 1150 mm ≤ H₂ ≤ 2450 mm.

With such the arrangement, on one hand, the overall size of the plurality of battery cell layer groups 210 is not excessively large, to cause that the battery cell layer groups are suitable for different use scenarios, and the energy storage battery cabinet 1 using the plurality of battery cell layer groups 210 of the present disclosure is also easy to move and disassemble. On the other hand, the overall size of the plurality of battery cell layer groups 210 is not excessively small, to cause that the power stored in the plurality of battery cell layer groups 210 can satisfy the use in most situations and the endurance is strong. Moreover, the overall size of the battery cell layer groups 210 is more matched with the cabinet body 100, and the volume utilization rate is also high.

According to some specific embodiments of the present disclosure, as shown in FIG. 3 to FIG. 6, a plurality of battery cell layer groups 210 form one battery cell unit 220, or a plurality of battery cell layer groups 210 form a plurality of battery cell units 220. The plurality of battery cell units 220 are arranged in the height direction of the cabinet body 100. Each battery cell unit 220 includes a plurality of battery cell layer groups 210 and two adjacent battery cell layer groups 210 of each battery cell unit 220 abut against each other.

Therefore, no protection structure needs to be additionally provided between the battery cells 200 of each battery cell layer group 210, to cause that the number of parts in the energy storage battery cabinet 1, and more space in the energy storage battery cabinet 1 can be left for arranging the battery cells 200, and to achieve the purpose of improving the Volumetric Cell to System rate and the energy density of the energy storage battery cabinet 1.

According to some specific embodiments of the present disclosure, as shown in FIG. 3 to FIG. 6, an air duct gap 230 is located between the battery cells 200 of two adjacent battery cell layer groups 210 of each battery cell unit 220. Therefore, the battery cells 200 of the two adjacent battery cell layer groups 210 do not directly transfer heat to each other, to cause that heat accumulation between the battery cells 200 can be avoided, the battery cells 200 of each battery cell layer group 210 and the energy storage battery cabinet 1 have a larger air heat exchange area, and the heat dissipation capability of the battery cells 200 is improved.

According to some specific embodiments of the present disclosure, as shown in FIG. 3 to FIG. 6, the air duct gap 230 has a size ranging from 5 mm to 20 mm in the height direction of the cabinet body 100.

With such the arrangement, the distance between the battery cells 200 of the two battery cell layer groups 210 is not less than 5 mm, which can facilitate sufficient heat dissipation of the battery cells 200 in each battery cell layer group 210 and avoid thermal runaway caused by heat accumulation. Moreover, the distance between the battery cells 200 of the two battery cell layer groups 210 is not greater than 20 mm, which can ensure the Volumetric Cell to System rate and the energy density of the energy storage battery cabinet 1.

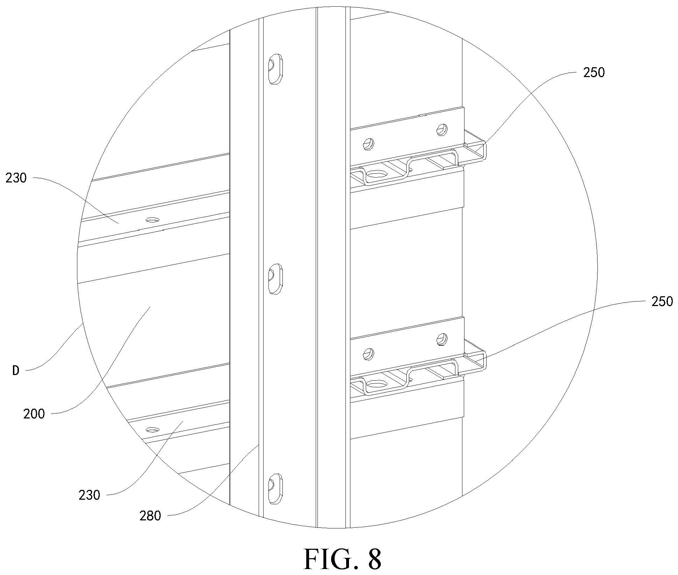

According to some specific embodiments of the present disclosure, as shown in FIG. 3 to FIG. 6 and FIG. 8, each battery cell layer group 210 further includes a first bottom plate 240 and a second bottom plate 250. The first bottom plate 240 and the second bottom plate 250 are spaced apart in one of the width direction of the cabinet body 100 and the depth direction of the cabinet body 100. For two adjacent battery cell layer groups 210 of each battery cell unit 220, the first bottom plate 240 and the second bottom plate 250 of one battery cell layer group 210 abut against the battery cells 200 of the other battery cell layer group 210. An air duct gap 230 is formed between the first bottom plate 240 and the second bottom plate 250.

Therefore, by the arrangement of the first bottom plate 240 and the second bottom plate 250, on one hand, an adjacent battery cell layer groups 210 can be supported, to cause that the plurality of battery cell layer groups 210 can be mutually limited and supported by the first bottom plate 240 and the second bottom plate 250, and relative positions between the plurality of battery cell layer groups 210 are fixed. On the other hand, the first bottom plate 240 and the second bottom plate 250 can guide a gas that enters the air duct gap 230, to improve the heat dissipation efficiency of the gas for the battery cells 200, to cause that the battery cells 200 are less likely to be damaged by heat and the service life of the energy storage battery cabinet 1 is prolonged.

According to some specific embodiments of the present disclosure, as shown in FIG. 3 to FIG. 6, each battery cell unit 220 includes a base 260 and the plurality of battery cells 200 of the battery cell unit 220 are supported on the base 260. Each base 260 may be directly connected to the cabinet body 100.

Therefore, the number of the plurality of battery cell units 220 is more than one, the number of the bases 260 corresponds to the number of the battery cell units 220, to cause that the maximum pressure on the battery cell layer group 210 in each battery cell unit 220 can be reduced, the number of the battery cell units 220 in the energy storage battery cabinet 1 can be increased, and the damage probability of the battery cell layer group 210 in each battery cell unit 220 can be reduced.

According to some specific embodiments of the present disclosure, as shown in FIG. 3 to FIG. 6, at least one restraint band 270 is provided above each battery cell unit 220. Two ends of each restraint band 270 are respectively connected to pull rods 280, and a lower end of each pull rod 280 is connected to the base 260 of the battery cell unit 220.

The pull rod 280 may extend along the height direction of the cabinet body 100, and the pull rod 280 is located at two opposite sides of the battery cell layer group 210 in the width direction or the depth direction of the cabinet body 100. In other words, if the pull rods 280 are located at two sides of the battery cell layer group 210 in the width direction of the cabinet body 100, the restraint band 270 may extend along the width direction of the cabinet body 100, and the pull rod 280 can fasten and limit the battery cell layer group 210 in the width direction of the cabinet body 100. If the pull rods 280 are located at two sides of the battery cell layer group 210 in the depth direction of the cabinet body 100, the restraint band 270 may extend along the depth direction of the cabinet body 100, and the pull rod 280 can fasten and limit the battery cell layer group 210 in the depth direction of the cabinet body 100.

In addition, through the coordination between the restraint band 270 and the pull rod 280, the battery cell layer group 210 can be fixed and limited in the height direction of the cabinet body 100, the position of the battery cell layer group 210 is not susceptible to change, the electrical connection reliability of the battery cells 200 is ensured, and the safety and structural stability of the energy storage battery cabinet 1 are improved. Moreover, no fastening structures need to be additionally provided between the at least two battery cell layer groups 210. Therefore, a large space in the energy storage battery cabinet 1 is left for arranging the battery cell layer groups 210. The volume utilization rate of the battery cells 200 can be greatly increased.

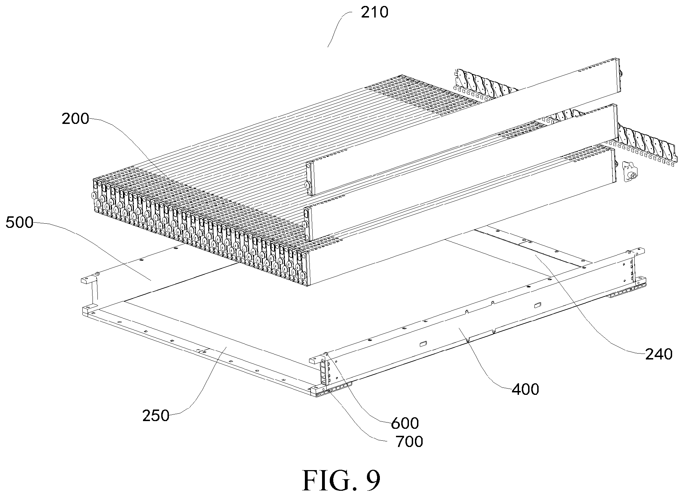

According to some specific embodiments of the present disclosure, as shown in FIG. 9, each battery cell layer group 210 further includes a first side plate 400 and a second side plate 500. The first side plate 400 and the second side plate 500 are respectively located at two sides of the battery cell layer group 210. The first side plate 400 and the second side plate 500 are oppositely disposed in the other direction of the width direction and the depth direction of the cabinet body 100. Two ends of the first bottom plate 240 are respectively connected to one end of the first side plate 400 and one end of the second side plate 500. Two ends of the second bottom plate 250 are respectively connected to the other end of the first side plate 400 and the other end of the second side plate 500.

For the two adjacent battery cell layer groups 210 in the height direction of the cabinet body 100, the first bottom plate 240 of one battery cell layer group 210 abuts against the first side plate 400 and the second side plate 500 of the other battery cell layer group 210, and the second bottom plate 250 of the one battery cell layer group 210 abuts against the first side plate 400 and the second side plate 500 of the other battery cell layer group 210.

With such the arrangement, the two adjacent battery cell layer groups 210 do not need to be directly stopped by the battery cells 200. Therefore, the probability that the battery cells 200 are broken by force can be reduced. Moreover, the first side plate 400 and the second side plate 500 are located at opposite sides of the battery cell layer group 210, which can prevent two adjacent battery cell layer groups 210 from being deflected due to force, and the arrangement of the battery cell layer groups 210 is more stable.

In some specific embodiments of the present disclosure, as shown in FIG. 9, each of the first bottom plate 240 and the second bottom plate 250 is provided with one of a limiting bar 600 and a limiting hole 700 and each of the first side plate 400 and the second side plate 500 is provided with the other one of the limiting bar 600 and the limiting hole 700.

For two adjacent battery cell layer groups 210 in the height direction of the cabinet body 100, the limiting bar 600 of one battery cell layer group 210 is matched with the limiting hole 700 of the other battery cell layer group 210.

Through the coordination between the limiting hole 700 and the limiting bar 600, the position between the adjacent battery cell layer groups 210 can be fixed, and relative rotation between the adjacent battery cell layer groups 210 can be prevented. The positioning accuracy is high, the assembly and electrical connection are more reliable, and the safety is high.

In some specific embodiments of the present disclosure, as shown in FIG. 9, either the limiting bars 600 or the limiting holes 700 are distributed at two ends of the first bottom plate 240 and two ends of the second bottom plate 250, and the other one of the limiting bars 600 and the limiting holes 700 are distributed at two ends of the first side plate 400 and two ends of the second side plate 500.

Therefore, more fixing points are provided between the adjacent battery cell layer groups 210, to further improve the positioning accuracy between the adjacent battery cell layer groups 210. The assembly and electrical connection is more reliable and a high safety is achieved.

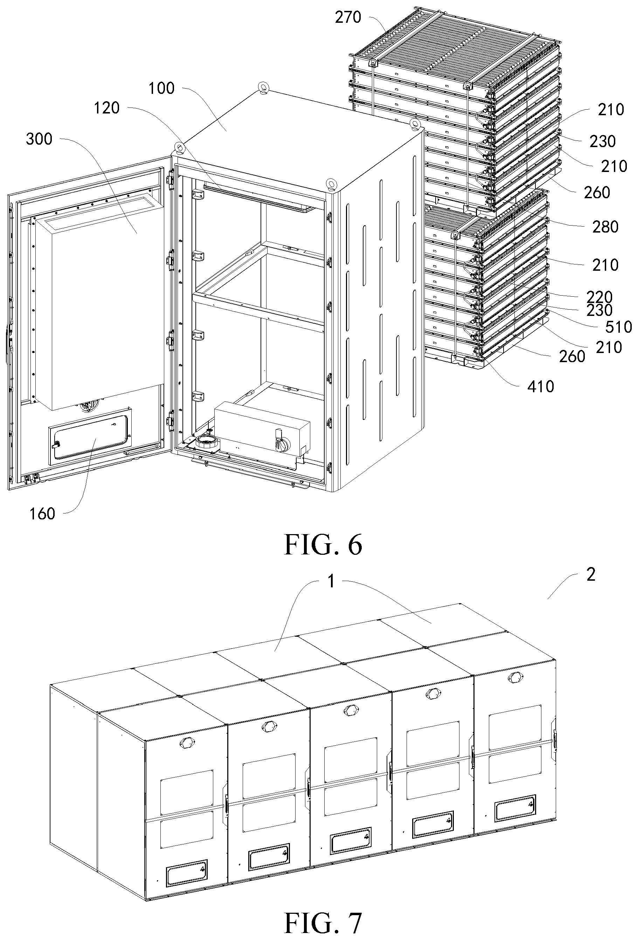

In some specific embodiments of the present disclosure, as shown in FIG. 6 and FIG. 9, for two adjacent battery cell layer groups 210 in the height direction of the cabinet body 100, the first side plate 400 of the other battery cell layer group 210 is fastened to the first bottom plate 240 and the second bottom plate 250 of one battery cell layer group 210 by first fasteners 410. The second side plate 500 of the other battery cell layer group 210 is fastened to the first bottom plate 240 and the second bottom plate 250 of the one battery cell layer group 210 by second fasteners 510. The first fasteners 410 and the second fasteners 510 may be threaded fasteners.

With such the arrangement, the relative position between the adjacent battery cell layer groups 210 can be fixed, and separation between the adjacent battery cell layer groups 210 can be prevented in a transportation or assembly process. Therefore, the adjacent battery cell layer groups 210 can be integrally disassembled and assembled. Not only a high assembly efficiency is achieved, but also the positioning accuracy between the adjacent battery cell layer groups 210 in the entire transportation and assembly process can be ensured. Therefore, the overall assembly accuracy of the energy storage battery cabinet 1 is high, the assembly and electrical connection are more reliable, and the safety is high.

In some specific embodiments of the present disclosure, as shown in FIG. 6 and FIG. 9, the first fasteners 410 are distributed at two ends of the first side plate 400, and the second fasteners 510 are distributed at two ends of the second side plate 500.

Therefore, multiple fixing points are provided between the relative positions of the adjacent battery cell layer groups 210, the adjacent battery cell layer groups 210 are less likely to be separated, and the positioning accuracy between the adjacent battery cell layer groups 210 can be more reliably ensured. Therefore, the overall assembly accuracy of the energy storage battery cabinet 1 is high, the assembly and electrical connection are more reliable, and the safety is high.

According to some specific embodiments of the present disclosure, as shown in FIG. 2, FIG. 5. and FIG. 6, the energy storage battery cabinet 1 further includes a refrigeration unit 300. The refrigeration unit 300 is installed in the cabinet body 100 and located at one side of the cabinet body 100 in the depth direction of the cabinet body 100. The refrigeration unit 300 is provided with an air outlet 310 and a return air inlet 320. A side of the cabinet body 100 in the height direction of the cabinet body 100 is configured with a heat dissipation air duct 120 communicated with the air outlet. An air duct gap 230 is provided between the battery cells 200 of two adjacent battery cell layer groups 210 in the height direction of the cabinet body 100. An airflow flows into the heat dissipation air duct 120 from the air outlet 310, then flows through the plurality of battery cell layer groups 210 from the other side of the cabinet body 100 in the depth direction and two sides of the cabinet body in the width direction 100, and flows to the return air inlet 320 through the air duct gap 230.

By providing the refrigeration unit 300, a gas in the energy storage battery cabinet 1 is driven to circulate, to cause exchange heat with the gas in the energy storage battery cabinet 1 and reduce the temperature of the gas in the energy storage battery cabinet 1. Therefore, a low-temperature gas in the energy storage battery cabinet 1 can cool and dissipate the battery cells 200 in the energy storage battery cabinet 1. Thermal runaway caused by heat accumulation of the battery cells 200 in the energy storage battery cabinet 1 can be avoided and the safety of the energy storage battery cabinet 1 is improved.

The air duct gap 230 is provided between the battery cells 200 of the two adjacent battery cell layer groups 210, the heat exchange area between the gas in the energy storage battery cabinet 1 and each battery cell 200 is large, and the heat exchange efficiency is improved. Moreover, the refrigeration unit 300 is located on one side of the cabinet body 100 in the depth direction of the cabinet body 100. Therefore, the refrigeration unit 300 does not affect the arrangement of the battery cell layer groups 210 along the height of the cabinet body 100. The number of the battery cell layer groups 210 can be more, to cause that the number of the battery cells 200 can also be more, so as to improve the volume utilization rate of the battery cells 200 of the energy storage battery cabinet 1.

According to some specific embodiments of the present disclosure, as shown in FIG. 1, FIG. 2, and FIG. 5, the cabinet body 100 is provided with a cabinet door 110 at one side in the depth direction thereof. The energy storage battery cabinet 1 further includes a refrigeration unit 300. The refrigeration unit 300 is installed in the cabinet body 100. The refrigeration unit 300 is installed on the cabinet door 110. The plurality of battery cell layer groups 210 are put in or taken out from the cabinet body 100 by opening the cabinet door 110.

By providing the refrigeration unit 300, a gas in the energy storage battery cabinet 1 is driven to circulate, to cause exchange heat with the gas in the energy storage battery cabinet 1 and reduce the temperature of the gas in the energy storage battery cabinet 1. Therefore, a low-temperature gas in the energy storage battery cabinet 1 can cool and dissipate the battery cells 200 in the energy storage battery cabinet 1. Thermal runaway caused by heat accumulation of the battery cells 200 in the energy storage battery cabinet 1 can be avoided and the safety of the energy storage battery cabinet 1 is improved.

In addition, the refrigeration unit 300 can be directly contacted by opening the cabinet door 110, which facilitates maintenance of the refrigeration unit 300 at a later stage. Moreover, the refrigeration unit 300 is not installed on the cabinet body 100, and does not interfere with the disassembly and assembly of the battery cell layer groups 210, to cause that the difficulties in disassembly and assembly are reduced.

According to some specific embodiments of the present disclosure, as shown in FIG. 1, FIG. 2, and FIG. 5, the cabinet door 110 is provided with an external circulation air inlet 130, an external circulation air outlet 140, and an exhaust apparatus 150.

With such the arrangement, the air in the cabinet body 100 can be replaced, and accumulation of hot air in the cabinet body 100 is prevented. Therefore, a phenomenon of thermal runaway due to overheating of the battery cells 200 is alleviated. In addition, the external circulation air inlet 130, the external circulation air outlet 140, and the exhaust apparatus 150 are directly installed on the cabinet door 110. Therefore, when the cabinet door 110 is opened, two ends of the external circulation air inlet 130, two ends of the external circulation air outlet 140, and two ends of the exhaust apparatus 150 can be cleaned. The cleaning is convenient.

In addition, the external circulation air inlet 130, the external circulation air outlet 140, and the exhaust apparatus 150 are arranged along the height direction of the cabinet body 100. Therefore, the external circulation air inlet 130, the external circulation air outlet 140, and the exhaust apparatus 150 can be conveniently distinguished. The assembling is convenient.

According to some specific embodiments of the present disclosure, as shown in FIG. 1, FIG. 2, and FIG. 5, the cabinet door 110 is provided with a maintenance door 160 openable and closable relative to the cabinet door 110. The maintenance door 160 is located at a lower portion of the cabinet door 110 in the height direction of the cabinet body 100.

Through the maintenance door 160, a control circuit in the energy storage battery cabinet 1 can be maintained. During subsequent maintenance of the energy storage battery cabinet 1, a main body of the cabinet door 110 does not need to be opened. Therefore, the battery cells 200 are not directly exposed to the air and the safety can be greatly improved. Moreover, the maintenance door 160 is located at the lower portion of the cabinet door 110 in the height direction of the cabinet body 100, the cabinet door 110 has a relatively high height, to facilitate opening and closing, to cause that the battery cells 200 can be conveniently put in or taken out.

An energy storage system 2 according to an embodiment of the present disclosure is described below with reference to the accompanying drawings. As shown in FIG. 7, the energy storage system 2 includes at least one energy storage battery cabinet 1 according to an embodiment of the present disclosure.

The energy storage system 2 according to this embodiment of the present disclosure has advantages such as a high energy density and a high Volumetric Cell to System rate and gives consideration to an output voltage of the energy storage system 2 by controlling a size parameter of the cabinet body 100 and a size parameter of the battery cell 200 using the energy storage battery cabinet 1 according to the above embodiment of the present disclosure.

Other compositions and operations of the energy storage battery cabinet 1 and the energy storage system 2 having same according to the embodiments of the present disclosure are known to those of ordinary skill in the art, and are not described herein again in detail.

In the description of this specification, description of reference terms such as "a specific embodiment" or "a specific example", means including specific features, structures, materials, or features described in the embodiment or example in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. An energy storage battery cabinet (1), comprising:
a cabinet body (100), a width W₁ of the cabinet body (100), a depth D₁ of the cabinet body (100), and a height H₁ of the cabinet body (100) satisfying: 0.8 ≤ W₁/D₁ ≤ 1.2 and 0.8 ≤ (W₁+D₁)/H₁ ≤ 1.2;
a plurality of battery cells (200), the plurality of battery cells (200) being disposed in the cabinet body (100), and a length L of the battery cell (200), a thickness D of the battery cell (200), and a width H of the battery cell (200) satisfying: (D+H)/L ≤ 0.2,
wherein a volume V₁ of each battery cell (200) and a volume V₃ of the cabinet body (100) satisfy: 0.0004 ≤ V₁/V₃ ≤ 0.001.

2. The energy storage battery cabinet (1) according to claim 1, wherein the battery cell (200) is configured in a rectangular parallelepiped shape.

3. The energy storage battery cabinet (1) according to claim 1 or 2, wherein a sum V₂ of volumes of the plurality of battery cells (200) and the volume V₃ of the cabinet body (100) satisfy: 0.35 ≤ V₂/V₃ ≤ 0.5.

4. The energy storage battery cabinet (1) according to any one of claims 1 to 3, wherein L, D, and H respectively satisfy: 400 mm ≤ L ≤ 1200 mm, 10 mm ≤ D ≤ 40 mm, and 60 mm ≤ H ≤ 150 mm.

5. The energy storage battery cabinet (1) according to any one of claims 1 to 4, wherein L, D, and H respectively satisfy: 800 mm ≤ L ≤ 970 mm, 10 mm ≤ D ≤ 30 mm, and 80 mm ≤ H ≤ 130 mm.

6. The energy storage battery cabinet (1) according to any one of claims 1 to 5, wherein W₁, D₁, and H₁ respectively satisfy: 600 mm ≤ W₁ ≤ 1200 mm, 700 mm ≤ D₁ ≤ 1250 mm, and 1300 mm ≤ H₁ ≤ 2600 mm.

7. The energy storage battery cabinet (1) according to any one of claims 1 to 6, wherein L and W₁ satisfy: 0.35 ≤ L/W₁ < 1.

8. The energy storage battery cabinet (1) according to any one of claims 1 to 7, further comprising:
a plurality of battery cell layer groups (210), the plurality of battery cell layer groups (210) being stacked along a height direction of the cabinet body (100), each battery cell layer group (210) comprising at least one battery cell (200) in one of the width direction and the depth direction of the cabinet body (100), and comprising the plurality battery cells (200) in the other one of the width direction and the depth direction of the cabinet body (100).

9. The energy storage battery cabinet (1) according to claim 8, wherein length directions of the battery cells (200) are arranged along the width direction of the cabinet body (100), thickness directions of the battery cells (200) are arranged along the depth direction of the cabinet body (100), and width directions of the battery cells (200) are arranged along the height direction of the cabinet body (100).

10. The energy storage battery cabinet (1) according to claim 8 or 9, wherein the number of the battery cell layer groups (210) ranges from 8 to 18.

11. The energy storage battery cabinet (1) according to any one of claims 8 to 10, wherein the plurality of battery cell layer groups (210) arranged in the height direction of the cabinet body (100) define an overall width of W₂, an overall depth of D₂, and an overall height of H₂, wherein W₂, D₂, and H₂ respectively satisfy: 500 mm ≤ W₂ ≤ 1100 mm; 450 mm ≤ D₂ ≤ 1000 mm; and 1150 mm ≤ H₂ ≤ 2450 mm.

12. The energy storage battery cabinet (1) according to any one of claims 8 to 11, wherein the plurality of battery cell layer groups (210) form a battery cell unit (220); or
the plurality of battery cell layer groups (210) form a plurality of battery cell units (220) and the plurality of battery cell units (220) are arranged in the height direction of the cabinet body (100); and
each battery cell unit (220) comprises the plurality of battery cell layer groups (210) and two adjacent battery cell layer groups (210) of each battery cell unit (220) abut against each other.

13. The energy storage battery cabinet (1) according to any one of claims 1-12, wherein an air duct gap (230) is located between battery cells (200) of two adj acent battery cell layer groups (210) of each battery cell unit (220).

14. The energy storage battery cabinet (1) according to claim 13, wherein the air duct gap (230) has a size ranging from 5 mm to 20 mm in the height direction of the cabinet body (100).

15. The energy storage battery cabinet (1) according to any one of claims 12 to 14, wherein each battery cell layer group (210) further comprises:
a first bottom plate (240) and a second bottom plate (250), the first bottom plate (240) and the second bottom plate (250) are spaced apart along one of the width direction of the cabinet body (100) and the depth direction of the cabinet body (100), for each of the two adjacent battery cell layer groups (210) of the battery cell unit (220), the first bottom plate (240) and the second bottom plate (250) of one battery cell layer group (210) abut against the battery cells (200) of the other battery cell layer group (210), and an air duct gap (230) is formed between the first bottom plate (240) and the second bottom plate (250).

16. The energy storage battery cabinet (1) according to claim 15, wherein each battery cell layer group (210) further comprises:
a first side plate (400) and a second side plate (500), the first side plate (400) and the second side plate (500) are spaced apart along the other direction of the width direction of the cabinet body (100) and the depth direction of the cabinet body (100), two ends of the first bottom plate (240) are respectively connected to one end of the first side plate (400) and one end of the second side plate (500), and two ends of the second bottom plate (250) are respectively connected to the other end of the first side plate (400) and the other end of the second side plate (500),
wherein for two adjacent battery cell layer groups (210) in the height direction of the cabinet body (100), the first bottom plate (240) of one battery cell layer group (210) abuts against the first side plate (400) and the second side plate (500) of the other battery cell layer group (210), and the second bottom plate (250) of the one battery cell layer group (210) abuts against the first side plate (400) and the second side plate (500) of the other battery cell layer group (210).

17. The energy storage battery cabinet (1) according to claim 16, wherein each of the first bottom plate (240) and the second bottom plate (250) is provided with one of a limiting bar (600) and a limiting hole (700) and each of the first side plate (400) and the second side plate (500) is provided with the other one of the limiting bar (600) and the limiting hole (700),
wherein for the two adjacent battery cell layer groups (210) in the height direction of the cabinet body (100), the limiting bar (600) of the one battery cell layer group (210) is fitted into the limiting hole (700) of the other battery cell layer group (210).

18. The energy storage battery cabinet (1) according to claim 17, wherein one of the limiting bars (600) and the limiting holes (700) are distributed at two ends of the first bottom plate (240) and two ends of the second bottom plate (250); and
the other one of the limiting bars (600) and the limiting holes (700) are distributed at two ends of the first side plate (400) and two ends of the second side plate (500).

19. The energy storage battery cabinet (1) according to any one of claims 16 to 18, wherein for the two adjacent battery cell layer groups (210) in the height direction of the cabinet body (100), the first side plate (400) of the other battery cell layer group (210) is fastened to the first bottom plate (240) and the second bottom plate (250) of the one battery cell layer group (210) by first fasteners (410), and the second side plate (500) of the other battery cell layer group (210) is fastened to the first bottom plate (240) and the second bottom plate (250) of the one battery cell layer group (210) by second fasteners (510).

20. The energy storage battery cabinet (1) according to claim 19, wherein the first fasteners (410) are arranged at two ends of the first side plate (400); and
the second fasteners (510) are arranged at two ends of the second side plate (500).

21. The energy storage battery cabinet (1) according to any one of claims 12 to 20, wherein each battery cell unit (220) comprises a base (260) and a plurality of battery cells (200) of the battery cell unit (220) are supported by the base (260).

22. The energy storage battery cabinet (1) according to claim 21, wherein at least one restraint band (270) is arranged above each battery cell unit (220), two ends of each restraint band (270) are respectively connected to pull rods (280), and a lower end of each pull rod (280) is connected to the base (260) of the battery cell unit (220).

23. The energy storage battery cabinet (1) according to any one of claims 8 to 22, further comprising:
a refrigeration unit (300), the refrigeration unit (300) being installed in the cabinet body (100) and located on one side of the cabinet body (100) in the depth direction of the cabinet body (100), the refrigeration unit (300) being provided with an air outlet (310) and a return air inlet (320), a side of the cabinet body (100) in the height direction of the cabinet body (100) being configured with a heat dissipation air duct (120) communicated with the air outlet (310), and an air duct gap (230) being provided between the battery cells (200) of the two adjacent battery cell layer groups (210) in the height direction of the cabinet body (100),
wherein an airflow flows into the heat dissipation air duct (120) from the air outlet (310), then flows through the plurality of battery cell layer groups (210) from the other side of the cabinet body (100) in the depth direction and two sides of the cabinet body (100) in the width direction, and flows to the return air inlet (320) through the air duct gap (230).

24. The energy storage battery cabinet (1) according to any one of claims 8 to 22, wherein the cabinet body (100) is provided with a cabinet door (110) on one side of the cabinet body (100) in the depth direction; and
the energy storage battery cabinet (1) further comprises a refrigeration unit (300) and the refrigeration unit (300) is installed in the cabinet body (100),
wherein the refrigeration unit (300) is installed on the cabinet door (110) and the plurality of battery cell layer groups (210) are put into or taken out from the cabinet body (100) by opening the cabinet door (110).

25. The energy storage battery cabinet (1) according to claim 24, wherein the cabinet door (110) is provided with an external circulation air inlet (130), an external circulation air outlet (140), and an exhaust apparatus (150) and the external circulation air inlet (130), the external circulation air outlet (140), and the exhaust apparatus (150) are arranged along the height direction of the cabinet body (100).

26. The energy storage battery cabinet (1) according to claim 24 or 25, wherein the cabinet door (110) is provided with a maintenance door (160) openable and closable relative to the cabinet door (110) and the maintenance door (160) is located at a lower portion of the cabinet door (110) in the height direction of the cabinet body (100).

27. An energy storage system (2), comprising at least one energy storage battery cabinet (1) according to any one of claims 1 to 26.
